# FASCICULE DE BREVET EUROPEEN

(11) **EP 3 214 506 B1**
(45) Date de publication et mention de la délivrance du brevet: **30.01.2019**
(21) Numéro de dépôt: 16158809.0
(22) Date de dépôt: 04.03.2016
(51) Int. Cl.: G04B 17/06, G04B 17/34, F16F 1/04

(54) **SPIRAL A ENCOMBREMENT REDUIT A DOUBLE SECTION CONSTANTE**
KOMPAKTE SPIRALFEDER MIT KONSTANTEM DOPPELQUERSCHNITT
COMPACT HAIRSPRING WITH CONSTANT DOUBLE CROSS-SECTION

(43) Date de publication de la demande: 06.09.2017
(73) Titulaire: ETA SA Manufacture Horlogère Suisse, 2540 Grenchen (CH)
(72) Inventeur: Helfer, Jean-Luc, 2525 Le Landeron (CH); Cosandier, Yves-Alain, 1020 Renens (CH)
(74) Mandataire: Goulette, Ludivine

(56) Documents cités:
- EP-A1- 1 445 670
- EP-A2- 2 299 336
- CH-A1- 706 087

## Description

### Domaine de l'invention

L'invention se rapporte à un spiral à encombrement réduit et, plus particulièrement, un tel spiral destiné à coopérer avec un balancier pour former un résonateur.

### Arrière-plan de l'invention

Le prix d'un spiral en silicium est sensiblement proportionnel à sa surface, c'est-à-dire plus on arrive à graver de spiraux sur une même plaquette, plus bas est le prix d'un spiral à l'unité.

Il n'est toutefois pas possible de diminuer l'encombrement au hasard car les spires d'un spiral ne doivent pas se toucher aussi bien en contraction qu'en expansion. Le document CH706087 montre un spiral plat apte à être intégré dans un organe régulateur d'un mouvement d'horlogerie, le spiral comportant une série de spires formées par une lame enroulée, où le pas des spires de la partie intermédiaire augmente à partir des spires de la partie terminale intérieure vers les spires de la partie terminale extérieure selon une fonction linéaire.

### Résumé de l'invention

Le but de la présente invention est de pallier tout ou partie les inconvénients cités précédemment en proposant un spiral à encombrement réduit tout en garantissant que ses spires ne se touchent pas aussi bien en contraction qu'en expansion.

A cet effet, l'invention se rapporte à un spiral monobloc selon la revendication 1 et comportant une lame unique enroulée sur elle-même entre une spire interne et une spire externe, la lame au repos comprenant entre l'extrémité de la spire interne et la pénultième spire, une première zone dans laquelle le pas entre chaque spire augmente continument afin que le spiral, lorsqu'il est en contraction à une valeur de 360 degrés, ait un éloignement sensiblement constant entre chaque spire de la spire interne à la pénultième spire.

Avantageusement selon l'invention, on comprend que l'encombrement du spiral est réduit tout en garantissant un éloignement constant minimal entre les spires en contraction et, éventuellement, également en expansion. On peut donc chercher à minimiser la taille du spiral, sans pour autant perdre en propriétés chronométriques. Un tel spiral permet d'optimiser le nombre de spiraux qui seront gravés sur une même plaquette afin d'en réduire le coût unitaire.

Conformément à d'autres variantes avantageuses de l'invention :
- dans la première zone, le pas entre chaque spire augmente continument selon une valeur constante ;
- la première zone comporte une section constante ;
- dans la deuxième zone, le pas augmente continument selon une valeur constante ;
- la section de la lame est constante entre le début de la deuxième partie de la deuxième zone et l'extrémité de la spire externe ;
- le spiral est à base de silicium.

L'invention se rapporte également à un résonateur caractérisé en ce que le résonateur comporte un balancier coopérant avec un spiral selon l'une des variantes précédentes.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue de dessus en contraction d'un spiral selon l'invention ;
- la figure 2 est une vue de dessus au repos d'un spiral selon l'invention ;
- la figure 3 est une vue de dessus en expansion d'un spiral selon l'invention ;
- la figure 4 est un graphique représentant l'évolution du pas entre les spires en fonction du nombre de spire du spiral au repos ;
- la figure 5 est un graphique représentant l'évolution de l'épaisseur des spires en fonction du nombre de spire du spiral au repos ;
- la figure 6 est un graphique représentant l'évolution de l'éloignement entre spires en fonction du nombre de spire du spiral et du mouvement du spiral.

### Description détaillée des modes de réalisation préférés

L'invention se rapporte à un spiral à encombrement réduit destiné à coopérer avec un balancier pour former un résonateur du type balancier - spiral pour une pièce d'horlogerie.

Le développement de la présente invention a été initié pour optimiser le nombre de spiraux sur une même plaquette à base de silicium tout en garantissant que les spires de chaque spiral ne se touchent pas aussi bien en contraction qu'en expansion. Toutefois, on comprend que le spiral ne saurait se limiter à un matériau à base de silicium. De manière non limitative, on comprend qu'une même logique est applicable à un spiral formé à partir d'un procédé LIGA, c'est-à-dire à base d'un matériau électriquement conducteur ou tout autre matériau fabricable en plaquette.

Les termes à base de silicium signifient un matériau comportant du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium. Bien entendu, quand le matériau à base de silicium est sous phase cristalline, n'importe quelle orientation cristalline peut être utilisée.

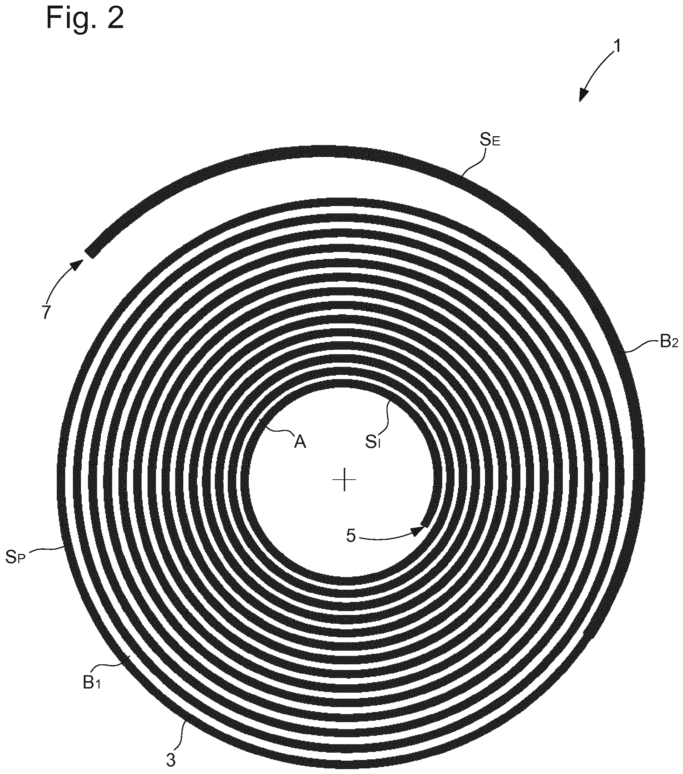

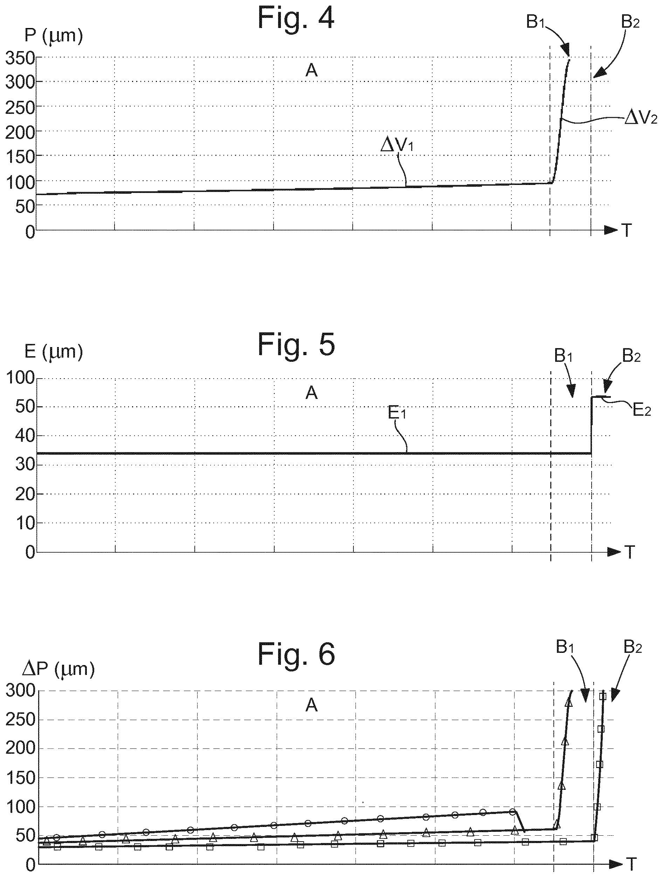

Comme illustré à la figure 2, l'invention se rapporte ainsi à un spiral 1 monobloc comportant une lame 3 unique enroulée sur elle-même entre une spire interne S_{I} et une spire externe S_{E}. Selon l'invention, la lame 3 du spiral 1, dans sa position de repos de la figure 2, comprend entre l'extrémité 5 de la spire interne S_{I} et la pénultième spire S_{P}, une première zone A dans laquelle le pas entre chaque spire augmente continûment comme illustré à la figure 4.

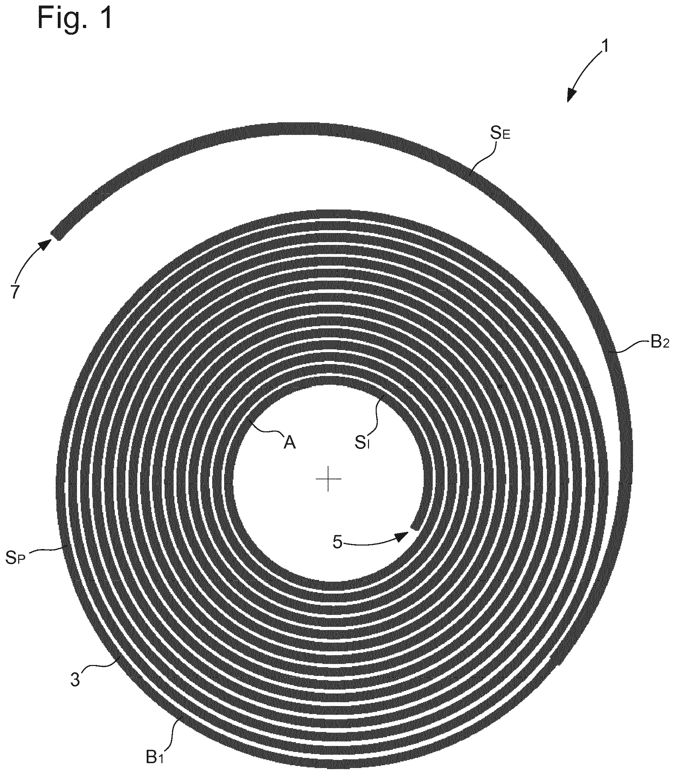

Cette configuration avantageuse permet au spiral 1, lorsqu'il est en contraction, c'est-à-dire lorsque l'extrémité 5 de la spire interne S_{I} a effectué une rotation de sensiblement à -360 degrés par rapport au centre du spiral 1, comme visible à la figure 1, ait un éloignement sensiblement constant entre chaque spire, de la spire interne S_{I} à la pénultième spire S_{P}.

De manière préférée, comme illustré à la figure 4, le pas entre chaque spire augmente continument selon une valeur constante ΔV₁ dans la première zone A. De plus, comme illustré à la figure 5, la première zone A comporte, préférentiellement selon l'invention, une section constante. Ainsi, à titre d'exemple, la section constante peut comporter une épaisseur constante E₁ comprise entre 10 et 50 *µ*m et une hauteur constante comprise entre 50 *µ*m et 250 *µ*m.

Le spiral 1 comporte, selon l'invention, une deuxième zone B, en prolongement de la première zone A et comprise entre le début de la pénultième spire S_{P} et l'extrémité 7 de la spire externe S_{E}. La deuxième zone B comporte un pas, entre la pénultième spire S_{P} et la spire externe S_{E}, qui augmente continûment comme illustré à la figure 4.

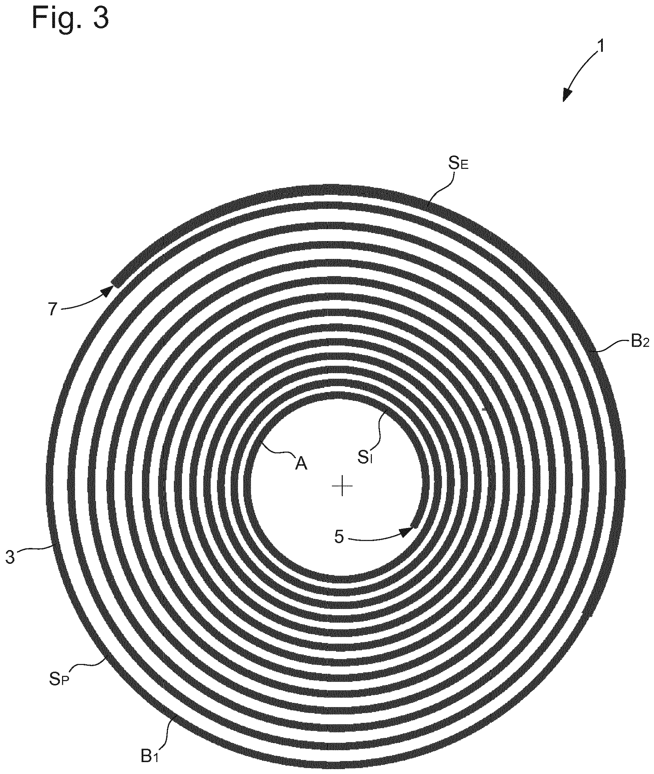

Cette configuration avantageuse permet au spiral 1, lorsqu'il est en expansion, c'est-à-dire lorsque l'extrémité 5 de la spire interne S_{I} a effectué une rotation de sensiblement à +360 degrés par rapport au centre du spiral 1, comme visible à la figure 3, ait un éloignement minimal, c'est-à-dire une distance prédéfinie de sécurité garantie, entre la pénultième spire S_{P} et la spire externe S_{E} pour éviter le contact notamment entre la pénultième spire S_{P} et la spire externe S_{E}.

De manière préférée, comme illustré à la figure 4, le pas entre chaque spire augmente continument selon une deuxième valeur constante ΔV₂ dans la deuxième zone B. Comme visible à la figure 4, la deuxième valeur constante ΔV₂ de la deuxième zone B est préférentiellement supérieure à la première valeur constante ΔV₁ de la première zone A.

De plus, comme illustré à la figure 5, la deuxième zone B comporte, selon l'invention, une première partie B₁ avec une section sensiblement identique à celle de la première zone A puis une deuxième partie B₂ dans laquelle la section est augmentée. De manière préférée, comme illustré à la figure 5, la section de la lame est constante entre le début de la deuxième partie B₂ de la deuxième zone B et l'extrémité 7 de la spire externe S_{E}.

En outre, la section est préférentiellement augmentée uniquement par la variation de l'épaisseur de la lame 3, c'est-à-dire avec une hauteur constante. Ainsi, comme visible à la figure 5, la deuxième valeur constante d'épaisseur de la deuxième partie B₂ de la deuxième zone B est préférentiellement supérieure à la première valeur constante d'épaisseur de la première zone A et de la première partie B₁ de la deuxième zone B. Ainsi, à titre d'exemple, la section constante de la deuxième partie B₂ de la deuxième zone B peut comporter une épaisseur constante comprise entre 25 et 75 *µ*m et une hauteur constante comprise entre 50 *µ*m et 250 *µ*m.

Un premier graphique représentant l'évolution du pas entre les spires en fonction du nombre de spire du spiral au repos est illustré à la figure 4. On peut voir que, dans la première zone A du spiral 1, la deuxième zone A comporte une augmentation constante selon la valeur ΔV₁ du pas jusqu'à la deuxième zone B. La deuxième zone B comporte une augmentation constante selon la valeur ΔV₂ du pas jusqu'à l'extrémité 7 de la spire externe S_{E}. Comme visible à la figure 4, l'augmentation constante ΔV₂ du pas de la deuxième zone B est beaucoup plus prononcée que celle ΔV₁ de la première zone A.

De manière complémentaire, un deuxième graphique illustré à la figure 5, montre indirectement l'évolution de la section de la lame 3. En effet, la fabrication à l'aide d'une plaquette induisant intrinsèquement une hauteur sensiblement constante, seule l'évolution de l'épaisseur des spires en fonction du nombre de spire du spiral est représentée à la figure 5. On peut voir que la première zone A du spiral 1 comporte une section constante E₁ jusqu'à la deuxième zone B. Plus exactement, la deuxième zone B comporte une première partie B₁ dont la section reste sensiblement identique à celle E₁ de la première zone A et une deuxième partie B₂, en prolongement de la première partie B₁, dont la section est augmentée.

Comme visible à la figure 5, la section E₂ de la lame 3 est sensiblement constante entre le début de la deuxième partie B₂ de la deuxième zone B et l'extrémité 7 de la spire externe S_{E}. On peut notamment voir dans l'exemple de la figure 5 que la section E₂ de la deuxième partie B₂ de la deuxième zone B est presque deux fois plus grande que celle E₁ de la première zone A et de la première partie B₁ de la deuxième zone B.

Enfin, un graphique représentant l'évolution ΔP de l'éloignement entre spires en fonction du nombre de spire du spiral est illustré à la figure 6. Plus précisément, l'éloignement ΔP des spires est illustré pour le spiral dans son état en contraction à la figure 1 (courbe annotée en carré □), dans son état au repos à la figure 2 (courbe annotée en triangle Δ) et, dans son état en expansion à la figure 3 (courbe annotée en cercle O).

Par conséquent, en état d'expansion annoté en cercle (O), on peut voir que, dans la première zone A du spiral 1, l'éloignement ΔP entre les spires comporte un éloignement ΔP entre les spires qui augmente continument jusqu'à ce que le point de pitonnage fixe de l'extrémité 7 ramène l'éloignement entre les spires à une valeur minimale, c'est-à-dire une distance prédéfinie de sécurité garantie. Dans l'exemple de la figure 6, on peut voir que la distance prédéfinie de sécurité garantie est d'environ 50 *µ*m,

De manière logique, puisque dans son état au repos, la courbe annotée en triangle Δ à la figure 6 est identique à la courbe de la figure 2. Enfin, en état de contraction annoté en carré (□), on peut voir que, dans la première zone A du spiral 1, l'éloignement ΔP entre les spires comporte un éloignement ΔP entre les spires qui augmente continument selon une pente si faible que l'éloignement ΔP peut être considéré comme sensiblement constant dans la première zone A. Dans l'exemple de la figure 6, on peut voir que l'éloignement ΔP dans la zone A est d'environ 35 *µ*m, On remarque, ensuite, que la deuxième zone B comporte une augmentation continue, plus marquée que dans la première zone A, de l'éloignement ΔP entre les spires en se rapprochant de l'extrémité 7 de la spire externe S_{E}.

A la figure 6, on remarque que les valeurs minimales des courbes en cercle (O) et en carré (□) ne sont pas identiques. Toutefois, elles pourraient être rendues géométriquement identiques.

De même, les valeurs décrites dans les figures 4 à 6 sont utilisés uniquement à titre d'exemple. Ainsi, suivant les configurations du spiral et/ou du résonateur auquel il appartient, la valeur minimale choisie pourrait être différente des 35 micromètres choisis comme exemple à la figure 6. On comprend donc que chaque valeur minimale des courbes en cercle (O) et en carré (□) pourrait être choisie inférieure ou supérieure à, respectivement, 50 et 35 micromètres.

Avantageusement selon l'invention, on comprend toutefois que ces caractéristiques particulières du spiral 1 autorisent un encombrement du spiral au repos qui est réduit tout en garantissant un éloignement constant minimal entre les spires en contraction et, préférentiellement, également en expansion. On peut donc minimiser la taille du spiral sans pour autant perdre en propriétés chronométriques. Un tel spiral selon l'invention permet d'optimiser le nombre de spiraux qui seront gravés sur une même plaquette afin d'en réduire le coût unitaire.

Bien entendu, la présente invention ne se limite pas à l'exemple illustré mais est susceptible de diverses variantes et modifications qui apparaîtront à l'homme de l'art. En particulier, la géométrie, c'est-à-dire les variations de pas, de section comme, par exemple, l'épaisseur et le nombre de spires, peut varier suivant les applications prévues.

A titre d'exemple, il pourrait être envisagé de manière additionnelle de réduire le nombre de spires pour encore d'avantage diminuer l'encombrement du spiral.

Il est également clair que l'angle de 360 degrés en contraction ou en expansion pourrait être plus faible sans sortir du cadre de l'invention. En effet, cet angle a été choisi car mécaniquement cet angle ne peut théoriquement pas être dépassé dans un résonateur du type balancier - spiral. Toutefois, l'importance n'est pas pour quel angle l'éloignement est minimal mais plutôt d'être sûr que l'éloignement minimal ne soit jamais dépassé. On comprend donc que l'angle pourrait être choisi volontairement plus bas car, suivant la configuration du mouvement, il est clair que cet angle ne sera pas dépassé en fonctionnement normal.

De plus, les valeurs en ordonnées de la figure 4, ne sont nullement limitatives. Ainsi, suivant la section de la première zone A, le pas minimal de la première zone A et/ou le pas maximal de la deuxième zone B peuvent varier. On comprend donc que seules les variations de pas sont conservées mais pas forcément selon les mêmes valeurs minimales et/ou maximales.

De manière similaire, les valeurs en ordonnées de la figure 5, ne sont nullement limitatives. Ainsi, suivant la variation du pas de la première zone A, la section minimale de la première zone A et/ou la section maximale de la deuxième zone B peuvent varier. On comprend donc que seules les variations de section sont conservées mais pas forcément selon les mêmes valeurs minimales et/ou maximales.

Enfin, même si les calculs ont été effectués à partir de la variation de l'épaisseur, il est bien évident que la variation doit être comprise comme une variation de section, c'est-à-dire que la variation s'applique à la hauteur et/ou à l'épaisseur de la lame du spiral.

## Revendications

1. Spiral (1) monobloc comportant une lame (3) unique enroulée sur elle-même entre une spire interne (S_{I}) et une spire externe (S_{E}), la lame (3) au repos comprenant :
- entre l'extrémité de la spire interne (S_{I}) et la pénultième spire (S_{P}), une première zone (A) dans laquelle le pas entre chaque spire augmente continûment afin que le spiral (1), lorsqu'il est en contraction à une valeur de 360 degrés, ait un éloignement sensiblement constant entre chaque spire de la spire interne (S_{I}) à la pénultième spire (Sp) ;
- une deuxième zone (B), en prolongement de la première zone (A) et comprise entre le début de la pénultième spire (S_{P}) et l'extrémité (7) de la spire externe (S_{E}), dans laquelle le pas augmente continument afin que le spiral (1), lorsqu'il est en expansion à une valeur de 360 degrés, ait un éloignement minimal entre la pénultième spire (S_{P}) et la spire externe (S_{E}) pour éviter leur contact, la deuxième zone (B) comportant une première partie (B₁) dont la section est sensiblement identique à celle de la première zone (A) et une deuxième partie (B₂), en prolongement de la première partie (B₁), dont la section est augmentée.

2. Spiral (1) selon la revendication précédente, **caractérisé en ce que**, dans la première zone (A), le pas entre chaque spire augmente continûment selon une valeur constante (ΔV₁).

3. Spiral (1) selon la revendication 1 ou 2, **caractérisé en ce que** la première zone (A) comporte une section constante.

4. Spiral (1) selon l'une des revendications précédentes, **caractérisé en ce que**, dans la deuxième zone (B), le pas augmente continûment selon une valeur constante (ΔV₂).

5. Spiral (1) selon l'une des revendications précédentes, **caractérisé en ce que** la section de la lame (3) est constante entre le début de la deuxième partie (B₂) de la deuxième zone (B) et l'extrémité (7) de la spire externe (S_{E}).

6. Spiral (1) selon l'une des revendications précédentes, **caractérisé en ce que** le spiral (1) est à base de silicium.

7. Résonateur **caractérisé en ce que** le résonateur comporte un balancier coopérant avec un spiral (1) selon l'une des revendications précédentes.

## Patentansprüche

1. Einteilige Spiralfeder (1), umfassend ein einzelnes zwischen einer inneren Windung (S_{I}) und einer äußeren Windung (S_{E}) auf sich selbst gewickeltes Blatt (3), wobei das Blatt (3) im Ruhezustand umfasst:
- zwischen dem Ende der inneren Windung (S_{I}) und der vorletzten Windung (S_{P}) eine erste Zone (A), in der die Steigung zwischen jeder Windung kontinuierlich zunimmt, damit die Spiralfeder (1), wenn sie auf einen Wert von 360 Grad kontrahiert ist, einen im Wesentlichen konstanten Abschnitt zwischen jeder Windung von der inneren Windung (S_{I}) bis zur vorletzten Windung (S_{P}) aufweist;
- eine zweite Zone (B) in Verlängerung der ersten Zone (A), die sich zwischen dem Anfang der vorletzten Windung (S_{P}) und dem Ende (7) der äußeren Windung (S_{E}) befindet und in der die Steigung kontinuierlich zunimmt, damit die Spiralfeder (1) dann, wenn sie auf einen Wert von 360 Grad expandiert ist, einen minimalen Abstand zwischen der vorletzten Windung (S_{P}) und der äußeren Windung (S_{E}) besitzt, um ihren Kontakt zu vermeiden, wobei die zweite Zone (B) einen ersten Teil (B₁), dessen Querschnitt im Wesentlichen gleich jenem der ersten Zone (A) ist, und einen zweiten Teil (B₂) in Verlängerung des ersten Teils (B₁), dessen Querschnitt erhöht ist, aufweist.

2. Spiralfeder (1) nach dem vorhergehenden Anspruch, **dadurch gekennzeichnet, dass** in der ersten Zone (A) die Steigung zwischen jeder Windung kontinuierlich mit einem konstanten Wert (ΔV₁) zunimmt.

3. Spiralfeder (1) nach Anspruch 1 oder 2, **dadurch gekennzeichnet, dass** die erste Zone (A) einen konstanten Querschnitt aufweist.

4. Spiralfeder (1) nach einem der vorhergehenden Ansprüche, **dadurch gekennzeichnet, dass** in der zweiten Zone (B) die Steigung kontinuierlich mit einem konstanten Wert (ΔV₂) zunimmt.

5. Spiralfeder (1) nach einem der vorhergehenden Ansprüche, **dadurch gekennzeichnet, dass** der Querschnitt des Blatts (3) zwischen dem Beginn des zweiten Teils (B₂) der zweiten Zone (B) und dem Ende (7) der äußeren Windung (S_{E}) konstant ist.

6. Spiralfeder (1) nach einem der vorhergehenden Ansprüche, **dadurch gekennzeichnet, dass** die Spiralfeder (1) auf Siliciumbasis hergestellt ist.

7. Resonator, **dadurch gekennzeichnet, dass** der Resonator eine Unruh umfasst, die mit einer Spiralfeder (1) nach einem der vorhergehenden Ansprüche zusammenwirkt.

## Claims

1. One-piece balance spring (1) comprising a single strip (3) wound on itself between an inner coil (S_{I}) and an outer coil (S_{E}), the strip (3) at rest comprising:
- between the end of the inner coil (S_{I}) and the penultimate coil (S_{P}), a first area (A), wherein the pitch between each coil continuously increases so that, when the angle of contraction of the balance spring (1) has a value of 360 degrees, there is a substantially constant distance between each coil from the inner coil (S_{I}) to the penultimate coil (S_{P});
- a second area (B), in the extension of the first area (A) and lying between the start of the penultimate coil (S_{P}) and the end (7) of the outer coil (S_{E}), wherein the pitch continuously increases so that, when the angle of expansion of the balance spring (1) has a value of 360 degrees, there is a minimum distance between the penultimate coil (S_{P}) and the outer coil (S_{E}) to prevent any contact therebetween, the second area (B) comprising a first portion (B₁), whose cross-section is substantially identical to that of the first area (A), and a second portion (B₂), in the extension of the first portion (B₁), whose cross-section is increased.

2. Balance spring (1) according to the preceding claim, **characterized in that**, in the first area (A), the pitch between each coil continuously increases by a constant value (ΔV₁).

3. Balance spring (1) according to claim 1 or 2, **characterized in that** the first area (A) has a constant cross-section.

4. Balance spring (1) according to any of the preceding claims, **characterized in that**, in the second area (B), the pitch continuously increases by a constant value (ΔV₂).

5. Balance spring (1) according to any of the preceding claims, **characterized in that** the cross-section of the strip (3) is constant between the start of the second portion (B₂) of the second area (B) and the end (7) of the outer coil (S_{E}).

6. Balance spring (1) according to any of the preceding claims, **characterized in that** the balance spring (1) is silicon-based.

7. Resonator **characterized in that** the resonator includes a balance cooperating with a balance spring (1) according to any of the preceding claims.
